(19) Europäisches Patentamt

European Patent Office

Office européen des brevets

(11) EP 1 256 605 A1

(12) EUROPEAN PATENT APPLICATION

(43) Date of publication:
13.11.2002 Bulletin 2002/46

(51) Int Cl.⁷: C09D 5/44, C08G 59/14, C09D 163/00

(21) Application number: 02291157.2

(22) Date of filing: 07.05.2002

(84) Designated Contracting States:
AT BE CH CY DE DK ES FI FR GB GR IE IT LI LU MC NL PT SE TR
Designated Extension States:
AL LT LV MK RO SI

(30) Priority: 09.05.2001 JP 2001138513

(71) Applicant: Nippon Paint Co., Ltd.
Osaka-shi, Osaka 531-8511 (JP)

(72) Inventor: Jun, Tanabe c/o Nippon Paint Co., Ltd
Yokohama-shi, Kanagawa 235-0023 (JP)

(74) Representative: Hubert, Philippe et al
Cabinet Beau de Loménie
158, rue de l'Université
75340 Paris Cédex 07 (FR)

(54) **Cationic electrodeposition coating composition containing long-chain alkyl sulfate copper salt component and method of producing the same**

(57) The present invention is to provide a method by which a cationic electrodeposition coating composition comprising, as a basic resin, a sulfide-modified epoxy resin having a propargyl group and an unsaturated double bond-containing hydrocarbon group can be improved in curability without using a metal catalyst containing a hazardous heavy metal.

The cationic electrodeposition coating composition of the invention comprises a long-chain alkyl sulfate ester copper salt component and a sulfide-modified epoxy resin having a propargyl group and an unsaturated double bond-containing hydrocarbon group.

EP 1 256 605 A1

**Description**

TECHNICAL FIELD

The present invention relates to a cationic electrodeposition coating composition and a method of producing the same, in particular a heavy metal-free electrodeposition coating composition and a method of producing the same.

PRIOR ART

In recent years, pressure has been rising in various fields for minimizing the use of substances possibly exerting harmful influences on the environment so that the loads to be borne by the environment can be reduced. In the case of cationic electrodeposition coatings used in undercoating of car bodies and parts for increasing their corrosion resistance, so-called lead-free electrodeposition coating compositions have been developed which do not contain lead that is regarded as a hazardous substance. Among them, there is a cationic electrodeposition coating composition comprising a resin composition having an epoxy resin skeleton and containing a sulfonium group, a propargyl group and an unsaturated double bond as disclosed in Japanese Kokai Publication 2000-38525. This cationic electrodeposition coating composition has been designed according to a different viewpoint from the prior art regarding the electrodeposition coatings which comprise an amine-modified epoxy resin and a blocked isocyanate curing agent. It is characterized by its environment-friendliness, for example it produces no volatilized matter in the step of baking.

However, when the curability of this electrodeposition coating is to be increased, it is necessary to use a metal catalyst containing a heavy metal such as cobalt or nickel, which may possibly exert harmful influences on the environment.

SUMMARY OF THE INVENTION

Accordingly, it is an object of the present invention to provide a method by which a cationic electrodeposition coating composition comprising, as a basic resin, a sulfide-modified epoxy resin having a propargyl group and an unsaturated double bond-containing hydrocarbon group can be improved in curability without using a metal catalyst containing a hazardous heavy metal.

A cationic electrodeposition coating composition of the invention comprises a long-chain alkyl sulfate ester copper salt component and a sulfide-modified epoxy resin having a propargyl group and an unsaturated double bond-containing hydrocarbon group.

Said long-chain alkyl sulfate ester copper salt component is contained, for example in an amount of 0.05 to 5% by weight relative to a resin solid matter.

Said long-chain alkyl sulfate ester copper salt component may be one represented by a formula $Cu(ROSO_3)_2$ (R being a hydrocarbon group containing 6 to 24 carbon atoms, which may contain a polyoxyalkylene unit) or one obtainable from a long-chain alkyl sulfate ester sodium salt and a copper compound.

Further, the above epoxy resin may be a novolak epoxy resin.

A production method of a cationic electrodeposition coating composition according to the present invention comprises adding a long-chain alkyl sulfate ester copper salt to a resin composition comprising a sulfide-modified epoxy resin having a propargyl group and an unsaturated double bond-containing hydrocarbon group.

The above addition may be carried out using the long-chain alkyl sulfate ester copper salt in the form of a solution.

The above solution may be prepared by dissolving said long-chain alkyl sulfate ester copper salt in an alcohol containing not more than 4 carbon atoms.

Furthermore, said long-chain alkyl sulfate ester copper salt may have a structure of a formula $Cu(ROSO_3)_2 \cdot nL$ (R being a hydrocarbon group containing 6 to 24 carbon atoms, which may contain a polyoxyalkylene unit, L being a ligand and n being an integer of 0 to 4).

Here, L may be $H_2O$ and n may be 4.

DETAILED DESCRIPTION OF THE INVENTION

The cationic electrodeposition coating composition of the invention comprises a long-chain alkyl sulfate ester copper salt component and a sulfide-modified epoxy resin having a propargyl group and an unsaturated double bond-containing hydrocarbon group. This long-chain alkyl sulfate ester copper salt component results from dissolution of the product of substitution of a copper atom for the sodium atom of a long-chain alkyl sulfate ester sodium salt, which is known as a surfactant, and can be represented by the formula $Cu(ROSO_3)_2$. In this formula, R is, for example, a hydrocarbon group containing 6 to 24 carbon atoms. As specific examples of R, there may be mentioned alkyl groups such as hexyl, octyl, decyl, dodecyl, hexadecyl, octadecyl and icosyl groups, and alkylphenyl groups such as octylphenyl, nonylphenyl, dodecylphenyl, oleylphenyl and hexadecylphenyl groups. The above R may contain a polyoxyalkylene unit. In this case, the carbon atoms contained in the polyoxyalkylene unit are not included within the number of carbon atoms in R. As specific examples of R when containing polyoxyalkylene unit, there may be mentioned polyoxyalkylenealkyl groups such as polyoxyethylenehexadecyl and polyoxyethylenedodecyl groups, and polyoxyalkylene-alkylaryl groups such as polyoxyethylene-nonylphenyl, polyoxyethylene-octylphenyl, polyoxyethylene-dodecylphenyl, polyoxyethylene-oleylphenyl and polyoxyethylene-hexadecylphenyl groups. Here, the above polyoxyalkylene unit may be a polyoxypropylene unit. The number of repetitions of the polyoxyalkylene unit is not particular but may be a value generally known such that the unit, when repeated and combined with a long-chain alkyl group, can show surfactant characteristics. Among them, those having 8 to 18 carbon atoms are preferred.

Generally, as mentioned later herein, this long-chain alkyl sulfate ester copper salt may form a complex having four water molecules as ligands. It is, however, not clear what form this compound takes in the cationic electrodeposition coating composition of the present invention. This is the reason why the term "long-chain alkyl sulfate ester copper salt component" is used herein. Since it is the copper and sulfate ester moieties that actually contribute to the curing reaction, it seems adequate to employ such term.

The above long-chain alkyl sulfate ester copper salt can be obtained from a long-chain alkyl sulfate ester salt and a copper compound. The long-chain alkyl sulfate ester salt is represented by $ROSO_3X$, wherein R is as mentioned above and X is Na, $NH_4$ or the like. The long-chain alkyl sulfate ester salt may be one well known as a surfactant and it can be used as such.

The above copper compound is not particularly restricted but includes copper nitrate, copper chloride, copper bromide, copper perchlorate, copper hydroxide, copper acetate and the like. Water-soluble ones are preferred.

Specifically, the above long-chain alkyl sulfate copper salt can be obtained by dissolving equivalent molar amounts of the long-chain alkyl sulfate salt and the copper compound separately in water and mixing up both aqueous solutions. When dodecyl sulfate sodium salt is used as the long-chain alkyl sulfate ester salt and copper nitrate as the copper compound, for instance, dodecyl sulfate ester copper salt is formed as a result of salt exchange and precipitates out, so that the desired product can be obtained by collecting the precipitate by filtration. It is described by C. S. Bruschini et al. in Polyhedron, 14, 3099-106 (1995) that this reaction can give $Cu(C_{12}H_{25}OSO_3)_2 \cdot 4H_2O$.

On the other hand, another essential constituent to be contained in the cationic electrodeposition coating composition of the invention, namely the sulfide-modified epoxy resin having a propargyl group and an unsaturated double bond-containing hydrocarbon group, is the so-called basic resin and is a product resulting from binding of a sulfonium group, a propargyl group and an unsaturated double bond-containing hydrocarbon group to an epoxy resin serving as a skeleton through the epoxy ring resulting from ring opening. This resin can be obtained by reacting the starting material epoxy resin with a sulfide/acid mixture and is described in Japanese Kokai Publication 2000-38525. The above-mentioned unsaturated double bond means a carbon-carbon double bond. As the above starting material epoxy resin, there may be mentioned epibisepoxy resins which are reaction products from a bicyclic phenolic compound, such as bisphenol A, bisphenol F or bisphenol S, and epichlorohydrin; derivatives of these as obtained by chain extension with a diol such as a bifunctional polyester polyol or polyether polyol, a bisphenol, a dicarboxylic acid, a diamine or the like; epoxidized polybutadiene; novolak phenol polyepoxy resins; novolak cresol polyepoxy resins; polyglycidyl acrylate; aliphatic polyol- or polyether polyol-derived polyglycidyl ethers such as triethylene glycol diglycidyl ether, tetraethylene glycol diglycidyl ether and polyethylene glycol diglycidyl ether; and polybasic carboxylic acid polyglycidyl esters. Preferred are novolak phenol epoxy resins, novolak cresol epoxy resins and like novolak epoxy resins since they can be polyfunctionalized for improving the curability. The above starting material epoxy resin preferably has a number average molecular weight of 400 to 15,000, more preferably 650 to 12,000.

The above-mentioned sulfide-modified epoxy resin preferably has a number average molecular weight of 500 to 20,000. When it is less than 500, the coating efficiency in cationic electrodeposition coating becomes low and, when it exceeds 20,000, no good coats can be formed on the substrate surface. A more preferred number average molecular weight can be designed according to the resin skeleton and, in the case of novolak phenol epoxy resins and novolak cresol epoxy resins, for instance, 700 to 5,000 is more preferred.

The above-mentioned sulfonium group is a hydratable functional group in the above cationic electrodeposition coating composition. It is thought that when a voltage or current above a certain level is applied thereto in the process of electrodeposition coating, the sulfonium group undergoes electrolytic reduction on the electrode, whereby the ionic group disappears and the sulfonium group becomes irreversibly converted to non-conductor. It seems that the above cationic electrodeposition coating composition can show high throwing power for the above reason.

It is considered that the hydroxide ion formed by an electrode reaction caused in this electrodeposition coating process is retained by the sulfonium group, whereby an electrolytically generated base appears in the electrodeposited coat. Presumably, the propargyl group, which exists in the electrodeposited coat and is low in reactivity under heating, can be converted to an allene bond, which is high in reactivity under heating, as a result of the appearance of the electrolytically generated base.

The content of the above sulfonium group is preferably 5 to 400 millimoles per 100 grams of the resin solid matter in the above sulfide-modified epoxy resin. When it is less than 5 mmol/100 g, no satisfactory throwing power or curability can be attained and the hydratability and bath stability become poor. When it exceeds 400 mmol/100 g, coat deposition on the substrate surface becomes unsatisfactory. A more preferred content can be selected according to the resin skeleton. In the case of novolak phenol epoxy resins and novolak cresol epoxy resins, for instance, the content is preferably 5 to 250 millimoles, more preferably 10 to 150 millimoles, per 100 grams of the resin solid matter.

It is considered that as a result of its being converted to the allene bond, as mentioned above, the above propargyl group can show improved reactivity and participate in constituting a curing system. Further, for unknown reasons, it, when coexisting with the sulfonium group, can further improve the throwing power as an electrodeposition coating.

The content of the above propargyl group is preferably 10 to 485 millimoles per 100 grams of the resin solid matter in the above sulfide-modified epoxy resin. When it is less than 10 mmol/100 g, no satisfactory throwing power or curability can be attained and, when it exceeds 485 mmol/100 g, the hydratability in the use as a cationic electrodeposition coating may be adversely affected. A more preferred content can be selected according to the resin skeleton. In the case of novolak phenol epoxy resins and novolak cresol epoxy resins, for instance, a content of 20 to 375 millimoles per 100 grams of the resin solid matter is preferred.

The content of the above unsaturated double bond is preferably 10 to 485 millimoles per 100 grams of the resin solid matter in the above sulfide-modified epoxy resin. When it is less than 10 mmol/100 g, no satisfactory curability can be manifested. When it exceeds 485 mmol/100 g, the hydratability in the use as a cationic electrodeposition coating may be adversely affected. A more preferred content can be selected according to the resin skeleton. In the case of novolak phenol epoxy resins and novolak cresol epoxy resins, for instance, a content of 20 to 375 millimoles per 100 grams of the solid matter in the resin composition is preferred.

In the present specification, the content of the unsaturated double bond is expressed in terms of the amount of epoxy groups into which an unsaturated double bond has been introduced. Thus, for example, even in such a case that a molecule containing a plurality of unsaturated double bonds, such as a long-chain unsaturated fatty acid, is introduced in the epoxy group, the content of the unsaturated double bond is expressed in terms of the amount of the epoxy group to which the above-mentioned molecule containing a plurality of unsaturated double bonds is introduced. This is because even when a molecule having a plurality of unsaturated double bonds is introduced into each epoxy group, it is substantially only one unsaturated double bond among them that is considered to participate in the curing reaction.

The total content of the above sulfonium group, propargyl group and unsaturated double bond-containing hydrocarbon group is preferably not more than 500 millimoles per 100 grams of the resin solid matter. At levels exceeding 500 mmol, no resin can practically be obtained or the desired performance characteristics cannot be obtained. A more preferred content can be selected according to the resin skeleton. In the case of novolak phenol epoxy resins and novolak cresol epoxy resins, for instance, a content of not more than 400 mmol is preferred.

Further, the total content of the propargyl group and unsaturated double bond-containing hydrocarbon group is preferably within the range of 80 to 450 millimoles per 100 grams of the resin solid matter. When it is less than 80 mmol, the curability may possibly be insufficient and, when it exceeds 450 mmol, the sulfonium content becomes insufficient and accordingly the throwing power may become insufficient. A more preferred content can be selected according to the resin skeleton. In the case of novolak phenol epoxy resins and novolak cresol epoxy resins, for instance, a content of 100 to 395 mmol is preferred.

The above sulfide-modified epoxy resin can be produced in the following manner. Thus, an epoxy resin having at least two epoxy groups per molecule is first reacted with a propargyl group-containing compound and a compound having an unsaturated double bond-containing hydrocarbon group and, then, a mixture of a sulfide and an acid is reacted with the remaining epoxy group for sulfonium group introduction. By carrying out the sulfonium group introduction later in this manner, the sulfonium group can be prevented from being decomposed upon heating.

As the above propargyl group-containing compound, there may be mentioned propargyl alcohol, propargylic acid and the like. In view of ease of availability and ease of reactivity, propargyl alcohol is preferably used, however. As the compound having an unsaturated double bond-containing hydrocarbon group, an unsaturated bond-containing alcohol and/or carboxylic acid can be used. The unsaturated bond-containing alcohol is not particularly restricted but includes, for example, allyl alcohol, 2-hydroxyethyl acrylate, 2-hydroxyethyl methacrylate, hydroxypropyl acrylate, hydroxypropyl methacrylate, hydroxybutyl acrylate, hydroxybutyl methacrylate, methallyl alcohol and like unsaturated double bond-containing ones.

The above-mentioned unsaturated bond-containing carboxylic acid is not particularly restricted but includes, for example, acrylic acid, methacrylic acid, ethacrylic acid, crotonic acid, maleic acid, phthalic acid, itaconic acid; half esters such as ethyl maleate, ethyl fumarate, ethyl itaconate, mono(meth)acryloyloxyethyl succinate and mono(meth)acryloyloxyethyl phthalate; synthetic unsaturated fatty acids such as oleic acid, linolic acid and ricinolic acid; and natural unsaturated fatty acids such as linseed oil and soybean oil.

Among these, long-chain ones such as synthetic unsaturated fatty acids and natural unsaturated fatty acids are preferably used since they can contribute to improving the physical properties of the resulting film.

The propargyl group-containing compound or the compound having an unsaturated double bond-containing hydrocarbon group and the amount thereof can be determined based on the functional group species to be introduced and the amount thereof. As for the above reaction conditions, the reaction is generally carried out at room temperature or at a temperature of 80 to 140°C for several hours. If necessary, a per se known component(s) required for promoting the reaction, such as a catalyst and/or a solvent, can be used. The completion of the reaction can be confirmed by measuring the epoxy group equivalent. The functional group introduced can be identified by nonvolatile matter measurement and/or instrumental analysis of the resin composition obtained. The order of the reaction with the propargyl group-containing compound and with the compound having an unsaturated double bond-containing hydrocarbon group is of no great importance. These compounds may be reacted with the epoxy resin simultaneously.

A sulfonium group is then introduced into the epoxy group remaining in the epoxy resin compositions having a propargyl group and an unsaturated double bond-containing hydrocarbon group. The sulfonium group introduction can be realized, for example, by reacting a sulfide/acid mixture with the epoxy group for sulfide introduction and sulfonium formation, or by introducing a sulfide and then converting the sulfide introduced to a sulfonium group using an acid or an alkyl halide, followed by anion exchange, if necessary. From the viewpoint of ease of availability of reactant materials, the method comprising using a sulfide/acid mixture is preferred.

The above sulfide is not particularly restricted but includes, for example, aliphatic sulfides, aliphatic-aromatic mixed sulfides, aralkyl sulfides, and cyclic sulfides. The substituents bound to these sulfides preferably contain 2 to 8 carbon atoms. Specifically, there may be mentioned, for example, diethyl sulfide, dipropyl sulfide, dibutyl sulfide, dihexyl sulfide, diphenyl sulfide, ethyl phenyl sulfide, tetramethylene sulfide, pentamethylene sulfide, thiodiethanol, thiodipropanol, thiodibutanol, 1-(2-hydroxyethylthio)-2-propanol, 1-(2-hydroxyethylthio)-2-butanol, and 1-(2-hydroxyethylthio)-3-butoxy-1-propanol.

Generally used as the acid mentioned above are organic acids such as formic acid, acetic acid, lactic acid, propionic acid, butyric acid, dimethylolpropionic acid, dimethylolbutanoic acid, N-acetylglycine, N-acetyl-1-alanine and sulfamic acid. The acid used here is the so-called neutralizing acid in cationic electrodeposition coatings. It is also possible to use two or more of these acids in combination.

As for the amount ratio in the above reaction, the sulfide and acid are used in an amount of 0.8 to 1.2 equivalents, preferably 0.9 to 1.1 equivalents, and water 1 to 20 equivalents, with the equivalent of the epoxy group in the epoxy compound being taken as 1. As the mixing ratio between the above sulfide and acid, the acid is in general preferably about 0.8 to 1.2 folds in molar ratio relative to sulfide. The above reaction temperature is not particularly restricted provided that no decomposition reaction will proceed. For example, a temperature from room temperature to 90°C may be mentioned, and a temperature of about 75°C is preferred. The above reaction can be carried out until it is confirmed, by acid value measurements, that the acid value will not change any longer but remains at 5 or below.

In the cationic electrodeposition coating composition of the present invention, said basic resin itself has curability, so that it is not always necessary to use a curing agent. For further improving the curability, however, a curing agent may be used. As such curing agent, there may be mentioned, for example, compounds having a plurality of propargyl groups and/or unsaturated double bonds. For example, there may be mentioned compounds obtainable by subjecting a propargyl group-containing compound, such as propargyl alcohol, or an unsaturated double bond-containing compound, such as acrylic acid, to addition reaction with a polyepoxide, such as a novolak phenol, or pentaerythritol tetraglycidyl ether.

The cationic electrodeposition coating composition of the present invention may further contain an amine. When it contains the above amine, the percentage of conversion of the sulfonium group to a sulfide upon electrolytic reduction in the electrodeposition process increases. The above amine is not particularly restricted but includes, for example, primary to tertiary monofunctional or polyfunctional aliphatic amines, alicyclic amines, aromatic amines and like amine compounds. Among these, watersoluble or water-dispersible ones are preferred and, for example, there may be mentioned alkylamines containing 1 to 8 carbon atoms, such as monomethylamine, dimethylamine, trimethylamine, triethylamine, propylamine, diisopropylamine and tributylamine; monoethanolamine, dimethanolamine, methylethanolamine, dimethylethanolamine, cyclohexylamine, morpholine, N-methylmorpholine, pyridine, pyrazine, piperidine, imidazoline, imidazole and the like. These may be used singly or two or more of them may be used in combination. Among them, monoethanolamine, diethanolamine, dimethylethanolamine and like hydroxyamines are preferred since they are superior in aqueous dispersion stability.

In the cationic electrodeposition coating composition of the invention, a curing catalyst other than the above-mentioned long-chain alkyl sulfate ester copper salt may be used for further improving the curability. Such curing catalyst is not particularly restricted but includes, for example, a compound resulting from binding of a ligand, such as cyclopentadiene or acetylacetone, or a carboxylic acid, such as acetic acid or naphthenic acid, to a transition metal, such as manganese, iron, cobalt, nickel, copper, rhodium, palladium or cerium, or a typical metal, such as aluminum or zinc. Considering the possible impact on the environment, iron naphthenate, copper acetate, copper acetylacetate, cerium naphthenate and cerium acetate are preferred among them. When the above curing catalyst is used, it is used preferably in an amount of 0.1 to 20 millimoles per 100 grams of the resin solid matter in the cationic electrodeposition coating composition. When copper or the like capable of forming an acetylide with the propargyl group is used as the above curing catalyst, it is also possible to introduce the curing catalyst into the resin by converting part of the propargyl groups in the above sulfide-modified resin to acetylides.

The amount of addition of the above amine is preferably 0.3 to 25 milliequivalents (meq) per 100 grams of the resin solid matter in the cationic electrodeposition coating composition. When it is less than 0.3 meq/100 g, no satisfactory effect will be produced on the throwing power. When it exceeds 25 meq/100 g, the effect producible is no more proportional to the amount of addition; this is uneconomical. A more preferred range is 1 to 15 meq/100 g.

The cationic electrodeposition coating composition of the invention may contain, where necessary, conventional additives for coatings, such as pigments, pigment-dispersing resins, surfactants, antioxidants, ultraviolet absorbers and curing promoters.

As for the above pigment-dispersing resins, a pigment-dispersing resin containing a sulfonium group and an unsaturated bond within the resin is preferably used. Such sulfonium group- and unsaturated bond-containing pigment-dispersing resin can be obtained, for example, by reacting a sulfide compound with a hydrophobic epoxy resin resulting from reacting a bisphenol-based epoxy resin with a half-blocked isocyanate, or by reacting a sulfide compound with the above resin in the presence of a monobasic acid and a hydroxyl-containing dibasic acid.

The production method of a cationic electrodeposition coating composition of the present invention comprises adding the above-mentioned long-chain alkyl sulfate ester copper salt to a resin composition comprising a sulfide-modified epoxy resin having a propargyl group and an unsaturated double bond-containing hydrocarbon group. This sulfide-modified epoxy resin having a propargyl group and an unsaturated double bond-containing hydrocarbon group is the one mentioned hereinabove referring to the cationic electrodeposition coating composition of the present invention. Therefore, the resin composition comprising the above sulfide-modified epoxy resin having a propargyl group and an unsaturated double bond-containing hydrocarbon group is obtainable by exclusion of the long-chain alkyl sulfate ester copper salt from the cationic electrodeposition coating composition of the present invention as mentioned hereinbefore.

The above production method may be carried out by mixing the above sulfide-modified epoxy resin having a propargyl group and an unsaturated double bond-containing hydrocarbon group, the long-chain alkyl sulfate ester copper salt and other necessary components. Salts represented by the formula $Cu(ROSO_3)_2 \cdot nL$ are preferably used as the long-chain alkyl sulfate ester copper salt in view of ease of their availability. Here, R is a hydrocarbon group containing 6 to 24 carbon atoms, which may contain a polyoxyalkylene unit, L represents a ligand and n is an integer of 0 to 4. More preferably, R is dodecyl or octadecyl group, L is $H_2O$ and n is 4.

Further, when the above long-chain alkyl sulfate ester copper salt is insoluble in water, for example in the case of said long-chain alkyl sulfate ester copper.salt, the long-chain alkyl sulfate ester copper salt is preferably used in the form of a solution so that the state of mixing in the coating composition can be made more homogeneous. The solvent for preparing such solution is selected according to the long-chain alkyl sulfate ester copper salt to be used, and such a solvent includes, for example, alcohols such as methanol, ethanol, isopropyl alcohol, n-butanol, methoxyethanol, butoxyethanol and methoxyisopropanol, amines such as propylamine, butylamine, benzylamine and pyridine, dimethylformamide and so forth. Among these, alcohols containing not more than 4 carbon atoms are preferred because of ease of handling. When the ligand-containing long-chain alkyl sulfate ester copper salt is used in the form of a solution in an alcohol or the like solvent, it is unknown in what state the ligand exists in the solution, as mentioned hereinbefore. However, this is considered to be of no importance since it is other moieties than the ligand that is considered to be involved in the curing reaction.

The thus-obtained cationic electrodeposition coating is used in cationic electrodeposition coating of a substrate. Cationic electrodeposition coating itself is carried out according to a per se known procedure. Generally, an electrodeposition bath is prepared by diluting the cationic electrodeposition coating composition with deionized water to a solid matter concentration of 5 to 40% by weight, preferably 15 to 25% by weight and electrodeposition coating can generally be carried out under such conditions that a bath temperature of 20 to 35°C and a coating voltage of 100 to 450 V. The film thickness in the above electrodeposition coating is appropriately within the range of 5 to 40 μm, preferably 10 to 30 μm, in terms of dry film thickness. It is thus preferred that the above electrodeposition coating conditions be selected so that such film thickness can be obtained. The coating films are appropriately baked generally at 120 to 260°C, preferably at 160 to 220°C, for 10 to 30 minutes.

The cationic electrodeposition coating composition of the invention, as containing a long-chain alkyl sulfate ester copper salt component, shows good curability even when it is free of any hazardous heavy metal. This is presumably due to the long-chain alkyl sulfate ester copper salt acting as a curing catalyst on the basic resin, namely the sulfide-modified epoxy resin having a propargyl group and an unsaturated double bond-containing hydrocarbon group. Namely, it is considered that copper acts on the propargyl group and the sulfate ester acts on the unsaturated double bond, respectively as a curing catalyst, whereby good curability is obtained.

The cationic electrodeposition coating composition of the invention contains no hazardous heavy metals and has good curability, hence can be utilized as an environment-friendly coating.

EXAMPLES

Production Example 1 Production of a long-chain alkyl sulfate copper salt

A solution prepared by dissolving 1.5 g of copper nitrate trihydrate in 5 g of deionized water and a solution prepared by dissolving 2.2 g of dodecyl sulfate ester sodium salt in 75 g of deionized water were mixed. The resulting precipitate was collected by suction filtration, washed with deionized water and air-dried to give 2.4 g of dodecyl sulfate ester copper salt tetrahydrate.

Production Example 2 Production of a sulfide-modified epoxy resin having a propargyl group and an unsaturated double bond-containing hydrocarbon group

Propargyl alcohol (621.3 g), 535.4 g of a linseed oil-derived fatty acid and 9.2 g of dimethylbenzylamine (as catalyst) were added to 3,082.5 g of Epo Tohto YDCN-703 (product of Tohto Kasei), which is a cresol novolak epoxy resin with an epoxy equivalent of 201.8, in a separable flask equipped with a stirrer, thermometer, nitrogen inlet tube and condenser. The temperature was raised to 110°C and the reaction was allowed to proceed for 2 hours until the epoxy equivalent became 1,850. Then, 311.6 g of 1-(2-hydroxyethylthio)-2-propanol, 110 g of glacial acetic acid and 329.9 g of deionized water were added, and the reaction was allowed to proceed at 75°C for 6 hours. After it was confirmed that the residual acid value was not higher than 5, 1,501.2 g of deionized water was added to give a sulfide-modified epoxy resin having a propargyl group and an unsaturated double bond-containing hydrocarbon group with a solid matter concentration of 70%. This had a sulfonium value of 23 mmol/100 g of varnish and a number average molecular weight (polystyrene equivalent determined by GPC) of 2,400.

Example 1 Production of a cationic electrodeposition coating composition

A solution prepared by dissolving 4.57 g of the dodecyl sulfate ester copper salt tetrahydrate obtained in Production Example 1 in 50 g of methanol was added, together with 500 g of deionized water, to 571 g of the sulfide-modified epoxy resin containing a propargyl group- and an unsaturated double bond-containing hydrocarbon group obtained in Production Example 2, and the mixture was stirred for 1 hour using a high speed mixer. Then, deionized water was further added to adjust the solid matter concentration to 23.5%. Further, after 1.7 g of cerium acetate was dissolved in deionized water and added thereto, 12 g of N-methylethanolamine was added, and the aqueous solution was adjusted to a solid matter concentration of 20.0% to give a cationic electrodeposition coating composition.

The cationic electrodeposition coating obtained was applied to zinc phosphate-treated steel panels by cationic electrodeposition to a dry film thickness of 20 μm, followed by baking under specified conditions to give electrodeposited coating films.

Comparative Example 1

A cationic electrodeposition coating composition was prepared and electrodeposited coating films were produced in the same manner as in Example 1 except that nickel acetylacetonate was used in lieu of dodecyl sulfate ester copper salt and that 0.8 g of copper acetate was used additionally in the step of adding cerium acetate.

Comparative Example 2

A cationic electrodeposition coating composition was prepared and electrodeposited coating films were produced in the same manner as in Example 1 except that dodecyl sulfate ester copper salt was not used and that 0.8 g of copper acetate was added additionally in the step of adding cerium acetate.

<Curability evaluation>

Each electrodeposited coating film obtained was placed in a Soxhlet extractor and extracted with acetone under refluxing conditions for 6 hours, and the gel fraction of the coating film was calculated according to the following formula. The results are shown in Table 1.

Gel fraction (%) = [weight after extraction

(g)/weight before extraction (g)] $\times$ 100

Table 1

|  |  | Ex. 1 | Compar. Ex. 1 | Compar. Ex. 2 |
|---|---|---|---|---|
| Gel fraction | 160°C $\times$ 20 min. | 93% | 90% | 80% |
|  | 160°C $\times$ 25 min. | 96% | 92% | 85% |
|  | 170°C $\times$ 25 min. | 100% | 96% | 92% |
| Hazardous heavy metal component |  | Not contained | Contained | Not contained |

It was confirmed that the cationic electrodeposition coating composition of the invention is comparable or superior in curability compared to the hazardous heavy metal-containing one. On the contrary, the heavy metal-free comparative composition could not exhibit sufficient curability.

**Claims**

1.   A cationic electrodeposition coating composition
       which comprises a long-chain alkyl sulfate ester copper salt component and a sulfide-modified epoxy resin having a propargyl group and an unsaturated double bond-containing hydrocarbon group.

2.   The cationic electrodeposition coating composition according to Claim 1,
       which contains said long-chain alkyl sulfate ester copper salt component in an amount of 0.05 to 5% by weight relative to a resin solid matter.

3.   The cationic electrodeposition coating composition according to Claim 1 or 2,
       wherein said long-chain alkyl sulfate ester copper salt component is one represented by a formula Cu$(ROSO_3)_2$, in the formula, R being a hydrocarbon group containing 6 to 24 carbon atoms, which may contain a polyoxyalkylene unit,

4.   The cationic electrodeposition coating composition according to any of Claims 1 to 3,
       wherein said long-chain alkyl sulfate ester copper salt component is one obtainable from a long-chain alkyl sulfate ester sodium salt and a copper compound.

5.   The cationic electrodeposition coating composition according to any of Claims 1 to 4,
       wherein said epoxy resin is a novolak epoxy resin.

6.   A production method of a cationic electrodeposition coating composition,
       which comprises adding a long-chain alkyl sulfate ester copper salt to a resin composition comprising a sulfide-modified epoxy resin having a propargyl group and an unsaturated double bond-containing hydrocarbon group.

7.   The production method of a cationic electrodeposition coating composition according to Claim 6,
       wherein said addition is carried out using the long-chain alkyl sulfate ester copper salt in the form of a solution.

8.   The production method of a cationic electrodeposition coating composition according to Claim 7,
       wherein said solution is prepared by dissolving said long-chain alkyl sulfate ester copper salt in an alcohol containing not more than 4 carbon atoms.

9.   The production method of a cationic electrodeposition coating composition according to any of Claims 6 to 8,
       wherein said long-chain alkyl sulfate ester copper salt has a structure of a formula Cu$(ROSO_3)_2 \cdot nL$, in the formula, R being a hydrocarbon group containing 6 to 24 carbon atoms, which may contain a polyoxyalkylene unit, L being a ligand and n being an integer of 0 to 4.

10. The production method of a cationic electrodeposition coating composition according to Claim 9, wherein said L is $H_2O$ and n is 4.

**European Patent Office**

**EUROPEAN SEARCH REPORT**

Application Number

EP 02 29 1157

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 3 400 144 A (KONRAD ALBRECHT ET AL) 3 September 1968 (1968-09-03) * claims * | 1 | C09D5/44 C08G59/14 C09D163/00 |
| D,A | EP 0 974 623 A (NIPPON PAINT CO LTD) 26 January 2000 (2000-01-26) * page 6, line 43 - line 50; claims; examples * | 1 | |
| A | US 5 612 395 A (NOJIRI HIROYUKI ET AL) 18 March 1997 (1997-03-18) * claims; examples * | 1 | |

|  | TECHNICAL FIELDS SEARCHED (Int.Cl.7) |
|---|---|
|  | C09D C09B |

The present search report has been drawn up for all claims

| Place of search | Date of completion of the search | Examiner |
|---|---|---|
| THE HAGUE | 6 September 2002 | Deraedt, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 02 29 1157

This annex lists the patent family members relating to the patent documents cited in the above–mentioned European search report.
The members are as contained in the European Patent Office EDP file on
The European Patent Office is in no way liable for these particulars which are merely given for the purpose of information.

06-09-2002

| Patent document cited in search report | | Publication date | Patent family member(s) | | Publication date |
|---|---|---|---|---|---|
| US 3400144 | A | 03-09-1968 | DE | 1206430 B | 09-12-1965 |
| | | | DE | 1210239 B | 03-02-1966 |
| | | | BE | 667334 A | |
| | | | CH | 446304 A | 15-11-1967 |
| | | | FR | 1441171 A | 03-06-1966 |
| | | | GB | 1091165 A | 15-11-1967 |
| | | | IL | 23908 A | 27-03-1969 |
| | | | NL | 6509368 A | 24-01-1966 |
| EP 0974623 | A | 26-01-2000 | JP | 3213586 B2 | 02-10-2001 |
| | | | JP | 2000038525 A | 08-02-2000 |
| | | | JP | 3207806 B2 | 10-09-2001 |
| | | | JP | 2000038526 A | 08-02-2000 |
| | | | EP | 0974623 A2 | 26-01-2000 |
| | | | US | 6218481 B1 | 17-04-2001 |
| | | | US | 2001018498 A1 | 30-08-2001 |
| US 5612395 | A | 18-03-1997 | JP | 7206969 A | 08-08-1995 |

EPO FORM P0459

For more details about this annex : see Official Journal of the European Patent Office, No. 12/82